(19) **Europäisches Patentamt**
**European Patent Office**
**Office européen des brevets**

(11) **EP 4 502 803 A1**

(12) **EUROPEAN PATENT APPLICATION**

(43) Date of publication:
**05.02.2025 Bulletin 2025/06**

(21) Application number: **24184148.5**

(22) Date of filing: **25.06.2024**

(51) International Patent Classification (IPC):
*G06F 9/50* (2006.01)

(52) Cooperative Patent Classification (CPC):
**G06F 9/5072; G06F 9/5066; G06F 11/3006;
G06F 11/302; G06F 11/3466;** G06F 2201/865

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.08.2023 IN 202321051753**

(71) Applicant: **Tata Consultancy Services Limited
Maharashtra (IN)**

(72) Inventors:
• **KULKARNI, RAJESH GOPALRAO**
  **411057 Pune, Maharashtra (IN)**
• **GAMERIA, PRADEEP**
  **411057 Pune, Maharashtra (IN)**
• **CHAHAL, DHEERAJ**
  **411006 Pune, Maharashtra (IN)**

(74) Representative: **Goddar, Heinz J.
Boehmert & Boehmert
Anwaltspartnerschaft mbB
Pettenkoferstrasse 22
80336 München (DE)**

(54) **METHODS AND SYSTEMS FOR GENERATING RECOMMENDATIONS FOR CLOUD INSTANCES FOR HIGH PERFORMANCE COMPUTING (HPC) APPLICATIONS**

(57) The present disclosure discloses a method and system for generating recommendations for cloud instances for high performance computing (HPC) applications. The present disclosure provides an intelligent Cloud instance Recommender framework comprising a suitability matcher, a performance analyzer, and a decision making enabler. The method of the present disclosure ensures that the HPC application is assessed for its suitability for the cloud since there is no need of recommending cloud services if the HPC application cannot be migrated to the cloud. This assessment is performed using a machine learning (ML) predictor engine which is trained upon some parameters of the HPC application. The ML predictor engine predicts execution time of the HPC application on cloud instances, and then a cost of execution is estimated by a mathematical model based on the predicted execution time. Also, a weightage to user's input is provided using a recommender engine to generate final recommendations.

Obtaining, via one or more hardware processors, a plurality of profile trace data of the HPC application and a dataset of cloud instances, wherein the plurality of profile trace data is obtained by performing application profiling using one or more profiling tools — 202

Generating, via the one or more hardware processors, (i) an application profile traces vector by combining one or more profile features extracted from the plurality of profile trace data and (ii) a cloud instances matrix using a plurality of cloud features obtained from an extended and transformed dataset of the cloud instances — 204

Computing, via the one or more hardware processors, a suitability score using the application profile traces vector and each record of the cloud instances matrix, wherein the suitability score is computed by calculating an Euclidean distance and a cosine similarity between the application profile traces vector and the cloud instances matrix — 206

Classifying, via the one or more hardware processors, the dataset of cloud instances into at least one of (i) a best-suited category, (ii) an average-suited category, and (iii) a worst-suited category, wherein classification is performed by applying K-means clustering method on the dataset of the cloud instances updated based on the generated suitability score — 208

Classifying, via the one or more hardware processors, the dataset of cloud instances into at least one of (i) a best-suited category, (ii) an average-suited category, and (iii) a worst-suited category, wherein classification is performed by applying K-means clustering method on the dataset of the cloud instances updated based on the generated suitability score — 210

Updating, via the one or more hardware processors, the dataset of the cloud instances with predicted execution time and predicted execution cost of the HPC application — 212

Generating, via the one or more hardware processors, a recommendation for one or more cloud instances from the updated dataset of the cloud instances in accordance with a plurality of user inputs using an optimization algorithm — 214

200 **FIG. 3**

**Description**

CROSS-REFERENCE TO RELATED APPLICATIONS AND PRIORITY

The present application claims priority from Indian patent application, Application No. 202321051753, filed in India on August 01, 2023.

TECHNICAL FIELD

The disclosure herein generally relates to the field of high performance computing (HPC) applications, and, more particularly, to methods and systems for generating recommendations for cloud instances for high performance computing (HPC) applications.

BACKGROUND

High Performance Computing (HPC) applications typically involve high compute intensive workloads and HPC requirement often exceeds on-premise compute capacity. Further, executing HPC jobs on dedicated clusters is costly and requires management. Thus, migration of application to cloud infrastructure is gaining momentum. Migrating applications along with their workloads from the on premise to cloud takes time. Also, it is needed to be made sure that the time taken for migration is not greater than maximum allowed waiting time in job manager queue and application is suitable for execution on cloud. Users get overwhelmed by different options available to try on. Finding out best/optimal combinations of such cloud services like best instances or best cloud provider or best storage service for application is a challenging part. There exist some conventional methods for recommending compute instances for general applications However, they fail to recommend best cloud setup for HPC applications.

SUMMARY

Embodiments of the present disclosure present technological improvements as solutions to one or more of the above-mentioned technical problems recognized by the inventors in conventional systems. For example, in one embodiment, a processor implemented method is provided. The processor implemented method for assessing cloud readiness of a high performance computing (HPC) application to be migrated on a cloud platform, comprising: obtaining, via one or more hardware processors, a plurality of profile trace data of the HPC application and a dataset of cloud instances, wherein the plurality of profile trace data is obtained by performing application profiling using one or more profiling tools; generating, via the one or more hardware processors, (i) an application profile traces vector by combining one or more profile features extracted from the plurality of profile trace data and (ii) a cloud instances matrix using a plurality of cloud features obtained from an extended and transformed dataset of the cloud instances; computing, via the one or more hardware processors, a suitability score using the application profile traces vector and each record of the cloud instances matrix, wherein the suitability score is computed by calculating a Euclidean distance and a cosine similarity between the application profile traces vector and the cloud instances matrix; classifying, via the one or more hardware processors, the dataset of cloud instances into at least one of (i) a best-suited category, (ii) an average-suited category, and (iii) a worst-suited category, wherein classification is performed by applying K-means clustering method on the dataset of the cloud instances updated based on the generated suitability score; predicting, via the one or more hardware processors, an execution time and an execution cost of the HPC application on one or more combinations of one or more machine specifications associated with the HPC application using a performance analyzer, wherein the performance analyzer utilizes a trained machine learning engine for predicting the execution time and the execution cost of the HPC application; updating, via the one or more hardware processors, the dataset of the cloud instances with the predicted execution time and the predicted execution cost of the HPC application; and generating, via the one or more hardware processors, a recommendation for one or more cloud instances from the updated dataset of the cloud instances in accordance with a plurality of user inputs using an optimization algorithm.

In another aspect, a system for assessing cloud readiness of a high performance computing (HPC) application to be migrated on a cloud platform is provided. The system comprising a memory storing instructions; one or more communication interfaces; and one or more hardware processors coupled to the memory via the one or more communication interfaces, wherein the one or more hardware processors are configured by the instructions to: obtain a plurality of profile trace data of the HPC application and a dataset of cloud instances, wherein the plurality of profile trace data is obtained by performing application profiling using one or more profiling tools; generate (i) an application profile traces vector by combining one or more profile features extracted from the plurality of profile trace data and (ii) a cloud instances matrix using a plurality of cloud features obtained from an extended and transformed dataset of the cloud instances; compute a suitability score using the application profile traces vector and each record of the cloud instances matrix, wherein the suitability score is computed by calculating a Euclidean distance and a cosine similarity between the application profile traces vector and the cloud instances matrix; classify the dataset of cloud instances into at least one of (i) a best-suited category, (ii) an average-suited category, and (iii) a worst-suited category, wherein classification is performed by applying K-means clustering method on the dataset of the cloud instances updated based on the generated suitability score; predict an execution time and an execution cost of the HPC application on one or more combinations of one or more machine specifications associated with the HPC application using a performance analyzer, wherein the performance analyzer utilizes a trained machine learning engine for predicting the execution time and the execution cost of the HPC application; update the dataset of the cloud instances with the predicted execution time and the predicted execution cost of the HPC application; and generate a recommendation for one or more cloud instances from the updated dataset of the cloud instances in accordance with a plurality of user inputs using an optimization algorithm.

In yet another aspect, a non-transitory computer readable medium for assessing cloud readiness of a high performance computing (HPC) application to be migrated on a cloud platform is provided. The non-transitory computer readable medium are configured by instructions for obtaining, a plurality of profile trace data of the HPC application and a dataset of cloud instances, wherein the plurality of profile trace data is obtained by performing application profiling using one or more profiling tools; generating, (i) an application profile traces vector by combining one or more profile features extracted from the plurality of profile trace data and (ii) a cloud instances matrix using a plurality of cloud features obtained from an extended and transformed dataset of the cloud instances; computing, a suitability score using the application profile traces vector and each record of the cloud instances matrix, wherein the suitability score is computed by calculating a Euclidean distance and a cosine similarity between the application profile traces vector and the cloud instances matrix; classifying, the dataset of cloud instances into at least one of (i) a best-suited category, (ii) an average-suited category, and (iii) a worst-suited category, wherein classification is performed by applying K-means clustering method on the dataset of the cloud instances updated based on the generated suitability score; predicting, an execution time and an execution cost of the HPC application on one or more combinations of one or more machine specifications associated with the HPC application using a performance analyzer, wherein the performance analyzer utilizes a trained machine learning engine for predicting the execution time and the execution cost of the HPC application; updating, the dataset of the cloud instances with the predicted execution time and the predicted execution cost of the HPC application; and generating, a recommendation for one or more cloud instances from the updated dataset of the cloud instances in accordance with a plurality of user inputs using an optimization algorithm.

In accordance with an embodiment of the present disclosure, training steps for the trained machine learning engine comprises: obtaining one or more attributes and the one or more machine specifications associated with the HPC application; preparing a training dataset comprising (i) the one or more attributes associated with the HPC application, (ii) the one or more combinations of one or more machine specifications associated with the HPC application, and (iii) and the execution time of the HPC application on each of the one or more combinations of the one or more machine specifications associated with the HPC application; training a grid of models on the prepared training dataset, wherein the grid of models is created by using one or more machine learning based regression models with a set of hyperparameters; and evaluating the grid of models in terms of an accuracy metric to obtain an optimal model from the grid of models.

In accordance with an embodiment of the present disclosure, the recommendation for the one or more cloud instances is generated based on (i) content of a configuration file comprising the plurality of user inputs and (ii) a criterion selected by the optimization algorithm between the execution cost and the execution time tradeoff.

In accordance with an embodiment of the present disclosure, the cloud readiness of the HPC application to be migrated on the cloud platform is assessed based on the generated recommendations for the one or more cloud instances.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary system generating recommendations for cloud instances for high performance computing (HPC) applications, according to some embodiments of the present disclosure.

FIG. 2 is a functional block diagram for generating recommendations for cloud instances for high performance computing (HPC) applications, using the system of FIG. 1, according to some embodiments of the present disclosure.

FIG. 3 illustrates an exemplary flow diagram illustrating a method for generating recommendations for cloud instances for high performance computing (HPC) applications, using the system of FIG. 1, in accordance with some embodiments of the present disclosure.

FIG. 4 is a functional block diagram of the performance analyzer for generating recommendations for cloud instances for high performance computing (HPC) applications, using the system of FIG. 1, according to some embodiments of the present disclosure.

FIG. 5 is a functional block diagram of the decision making enabler for generating recommendations for cloud instances for high performance computing (HPC) applications, using the system of FIG. 1, according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following embodiments described herein.

Traditionally, HPC applications have been executed on on-premise clusters as execution time of these applications/tasks range from a few hours to a few days. They also require multiple servers to execute these tasks. Dedicated clusters of such servers are costly to acquire and maintenance of these clusters increases efforts and operational costs. Migrating these tasks/jobs to the cloud has several advantages like providing on demand resources eliminating need to preplan resource capacity and risk of resources unavailability, and reduction in operation costs due to pay per use model and eliminating maintenance efforts and also provides balance between on-premises and cloud capacity. However, applications/ jobs are required to be assessed for their cloud readiness before migration. After this assessment for cloud readiness, determining optimal or most suitable cloud services combinations such as best instances or best cloud provider or best storage service for the application is a challenging part. On cloud there are several options available of different cloud providers and different cloud services for users to.

The present disclosure addresses the unresolved problems of the conventional approaches by assessing cloud portability of application whether application is suitable to be migrated on the cloud or not, recommending best combinations of cloud services like compute instances, serverless, storage and network services for the application, and predicting execution time of application on cloud and estimation of cost for that execution. Embodiments of the present disclosure provides a method and system for generating recommendations for cloud instances for high performance computing (HPC) applications. The present disclosure provides an intelligent Cloud instance Recommender framework comprising a suitability matcher, a performance analyzer, and a decision-making enabler. The method of the present disclosure ensures that the HPC application is assessed for its suitability for the cloud since there is no need of recommending cloud services if the HPC application/job cannot be migrated to the cloud. This assessment is performed using a machine learning (ML) predictor engine which is trained upon some parameters of the HPC application. The ML predictor engine predicts execution time of the HPC application on cloud instances including VM instances and serverless, and then a cost of execution is estimated by a mathematical model based on the predicted execution time. Also, a weightage to user's input such as SLA or cost is provided in the present disclosure using a recommender engine. The recommender engine consumes inputs received from user such as user's preferences/priorities and generate final recommendations based on them.

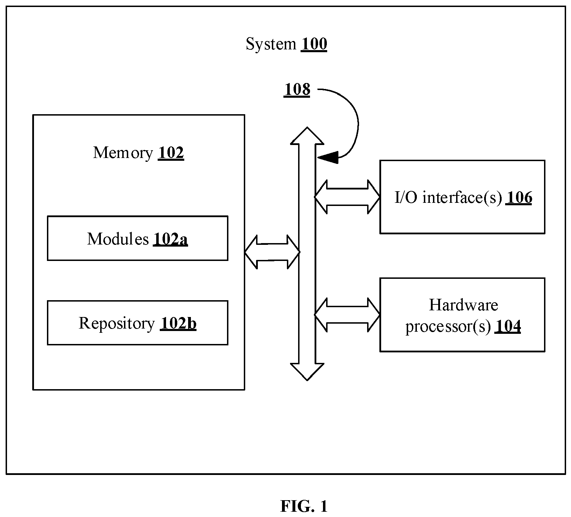

Referring now to the drawings, and more particularly to FIGS. 1 through 5, where similar reference characters denote corresponding features consistently throughout the figures, there are shown preferred embodiments and these embodiments are described in the context of the following exemplary system and/or method.

FIG. 1 illustrates an exemplary system for generating recommendations for cloud instances for high performance computing (HPC) applications, according to some embodiments of the present disclosure. In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism.

The I/O interface(s) 106 may include a variety of software and hardware interfaces, for example, a web interface, a graphical user interface, and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions 'processors' and 'hardware processors' may be used interchangeably. In an embodiment, the system 100 can be implemented in a variety of computing systems, such as laptop computers, portable computer, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 102a and a repository 102b for storing data processed, received, and generated by one or more of the plurality of modules 102a. The plurality of modules 102a may include routines, programs, objects, components, data structures, and so on, which perform particular tasks or implement particular abstract data types.

The plurality of modules 102a may include programs or computer-readable instructions or coded instructions that supplement applications or functions performed by the system 100. The plurality of modules 102a may also be used as, signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. Further, the memory 102 may include information pertaining to input(s)/output(s) of each step performed by the processor(s) 104 of the system 100 and methods of the present disclosure.

The repository 102b may include a database or a data engine. Further, the repository 102b amongst other things, may serve as a database or includes a plurality of databases for storing the data that is processed, received, or generated as a result of the execution of the plurality of modules 102a. Although the repository 102b is shown internal to the system 100, it will be noted that, in alternate embodiments, the repository 102b can also be implemented external to the system 100, where the repository 102b may be stored within an external database (not shown in FIG. 1) communicatively coupled to the system 100. The data contained within such external database may be periodically updated. For example, new data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database.

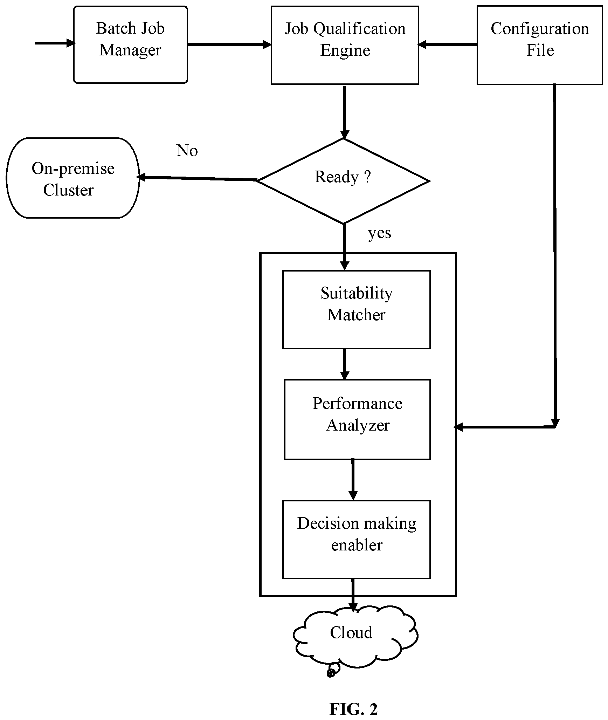

FIG. 2, with reference to FIG. 1, is a functional block diagram for generating recommendations for cloud instances for high performance computing (HPC) applications, using the system of FIG. 1, according to some embodiments of the present disclosure. As shown in FIG. 2, the framework of the present disclosure comprises a suitability matcher, a performance analyzer and a decision-making enabler to take a decision for deploying a HPC application on a cloud based on one or more generated recommendations.

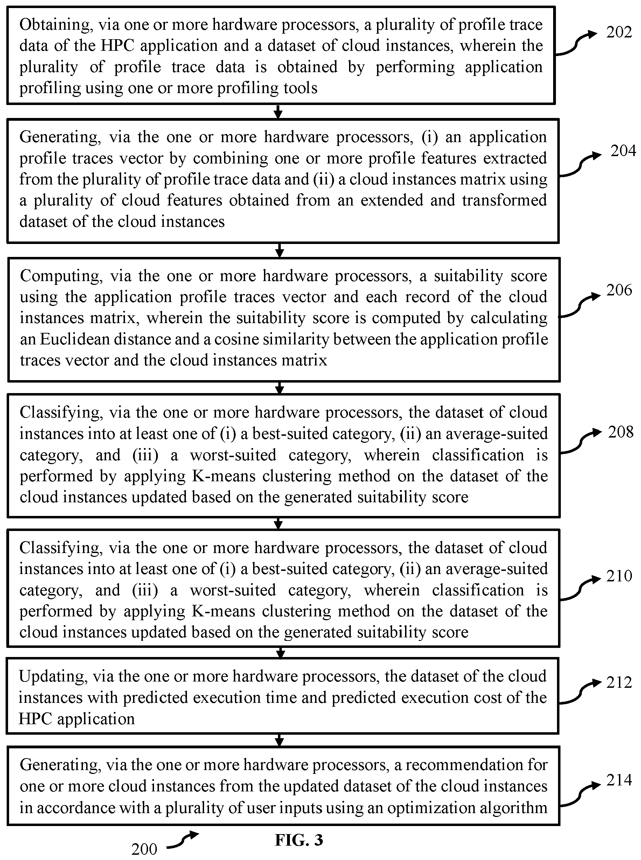

FIG. 3, with reference to FIGS. 1 and 2, illustrates an exemplary flow diagram illustrating a method for generating recommendations for cloud instances for high performance computing (HPC) applications, using the system of FIG. 1, in accordance with some embodiments of the present disclosure.

Referring to FIG. 3, in an embodiment, the system(s) 100 comprises one or more data storage devices or the memory 102 operatively coupled to the one or more hardware processors 104 and is configured to store instructions for execution of steps of the method by the one or more processors 104. The steps of the method 200 of the present disclosure will now be explained with reference to components of the system 100 of FIG. 1, the block diagram of FIG. 2, the flow diagram as depicted in FIG. 3, and one or more examples. Although steps of the method 200 including process steps, method steps, techniques or the like may be described in a sequential order, such processes, methods and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

In an embodiment, at step 202 of the present disclosure, one or more hardware processors 104 are configured to obtain a plurality of profile trace data of a high performance computing (HPC) application to be migrated on a cloud platform and a dataset of cloud instances. The plurality of profile trace data is obtained by performing application profiling using one or more profiling tools. As shown in FIG. 2, the suitability matcher receives the plurality of profile trace data and the dataset of cloud instances. The one or more profiling tools may include but are not limited to perf engine, collectl utility, SAR utility and Darshan tool. SAR and collectl are used to monitor system's resources like CPU usage, memory utilization, I/O devices consumption, Network monitoring, Disk usage, process and thread allocation, battery performance, plug and play devices, processor performance, file system, accelerators, and more. The perf engine is used for CPU analysis and memory analysis. The CPU analysis is performed by extracting information of execution of floating-point operations and core utilization. The memory analysis is performed by extracting information of memory reads and writes and memory utilization. The Darshan tool performs input/output (I/O) characteristics analysis by extracting information of I/O reads & writes and disk utilization.

At step 204 of the present disclosure, the one or more hardware processors 104 are configured to generate (i) an application profile traces vector by combining one or more profile features extracted from the plurality of profile trace data and (ii) a cloud instances matrix using a plurality of cloud features obtained from an extended and transformed dataset of the cloud instances. The plurality of profile trace data is preprocessed, cleaned and transformed before extracting the one or more profile features. The one or more cloud features may include but are not limited to number of cores, size of memory, disk space, disk input/output operations per second (IOPS), maximum number of disks or maximum disk space that can be availed, disk storage type, network bandwidth, network interface type, maximum number of network interface, CPU architecture, processor type, clock speed, accelerator type if any, accelerator capacity, rates of cloud services, and/or the like. The one or more profile features extracted from the plurality of profile trace data may include but are not limited to CPU utilization, memory utilization, disk utilization, disk reads/writes, network and accelerators utilization, instructions executed, and/or the like. The dataset of cloud instances comprises features including but are not limited to CPU capacity, memory capacity, memory read and write per second supported, disk capacity, supported I/O per second, GPU/accelerator capacity, and network bandwidth. The dataset of cloud instances is extended to obtain the extended dataset by including different combinations of same instance along with different supported services. For example, if an instance supports additional disk and network and those combinations are also included in the dataset. The extended dataset is further reprocessed and transformed to obtain the extended and transformed dataset of the cloud instances.

Further, at step 206 of the present disclosure, the one or more hardware processors 104 are configured to compute a suitability score using the application profile traces vector and each record of the cloud instances matrix. The suitability score is computed by calculating a Euclidean distance and a cosine similarity between the application profile traces vector and the cloud instances matrix. Each record in dataset of cloud instances represents a cloud instance specification vector. The cosine similarity is calculated between the application profile traces vector and the cloud instance specification vector. For example, if *A* represents the application profile traces vector and *B* represents the cloud instance specification vector, then the cosine similarity represented by $\alpha$ is calculated as shown in equation (1) below:

$$\alpha = A.B/(|A| * |B|) \quad (1)$$

Here, *A. B* is dot product of the application profile traces vector and the cloud instance specification vector and |A| is length of *A* vector. $\alpha$ ranges from 0 to 1 and the greater the value of $\alpha$, high the similarity is. *A* is a vector derived from the HPC application characteristics. *A* contains meaningful parameters extracted from processing the application profile traces. If *A* has *n* number of elements, then A is re[presented as $A = [a(1), a(2), a(3),...., a(n)]$. *B* is a vector derived by extracting meaningful parameters from cloud services specifications available. *B* is filtered such way that parameters of *B* matches with *A*. So finally, *B* is represented as $B = [b(1), b(2), b(3),......, b(n)]$. Further, the Euclidean distance represented by *d* between the application profile traces vector and the cloud instance specification vector, is determined as shown in equation (2) below:

$$d = |A - B| \quad (2)$$

If the greatest distance between the application trace vector and cloud instance specification vector is represented by $d_{max}$, then for each pair of vectors A and B, Euclidean similarity represented by $\beta$ is calculated as shown in equation (3) below:

$$\beta = 1 - (d/d_{max}) \quad (3)$$

The suitability score is represented by *C* and calculated using $\alpha$ and $\beta$ as shown in equation (4) shown below as:

$$C = \alpha * \beta * 100 \quad (4)$$

Here, C ranges from 0 to 100.

At step 208 of the present disclosure, the one or more hardware processors are configured to classify the dataset of cloud instances into at least one of (i) a best-suited category, (ii) an average-suited category, and (iii) a worst-suited category. The classification is performed by applying K-means clustering method on the dataset of the cloud instances updated based on the generated suitability score. The K-means clustering method is a well-known method which groups vectors based on a similarity parameter (scores are considered in the present disclosure) and assign label to each group.

Table 1 provided below shows a small subset of output of K-means clustering in small level experiments for the present disclosure.

Table 1

| index | Co re | Memory | Storage | Network | $\alpha$ | $\beta$ | Score | label |
|---|---|---|---|---|---|---|---|---|
| 0 | 1 | 2 | 8 | 1 | 0.485 714 | 0.91164 0 | 44.27967 7 | 2 |
| 1 | 1 | 2 | 4 | 1 | 0.662 541 | 0.93414 1 | 61.89068 1 | 2 |
| 2 | 4 | 8 | 8 | 2 | 0.844 926 | 0.92937 4 | 78.52518 3 | 1 |
| 3 | 1 | 2 | 8 | 1 | 0.485 714 | 0.91164 0 | 44.27967 7 | 2 |
| 4 | 12 | 24 | 96 | 4 | 0.479 243 | 0.00000 0 | 0.000000 | 0 |
| 5 | 1 | 8 | 2 | 1 | 1.000 000 | 1.00000 0 | 100.0000 00 | 1 |

Each suitability score is included in the dataset of cloud instance for updating the dataset of the cloud instances. This means that after calculating $\alpha$, $\beta$ and $C$, three columns are added to existing dataset thus updating it.

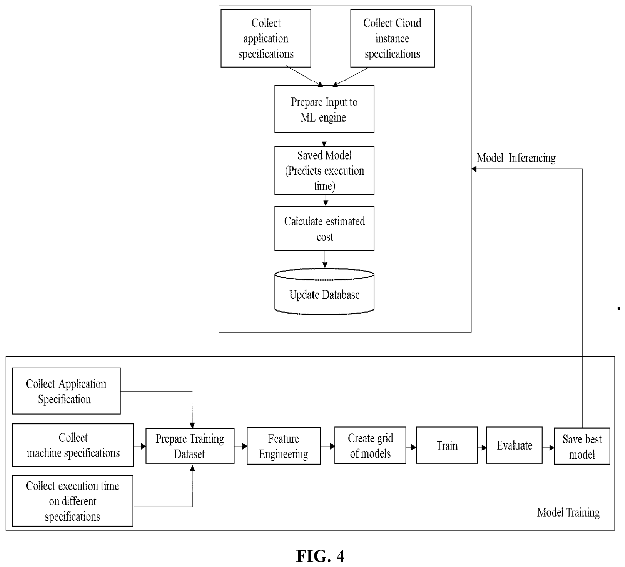

At step 210 of the present disclosure, the one or more hardware processors are configured to predict an execution time and an execution cost of the HPC application on one or more combinations of one or more machine specifications associated with the HPC application using a performance analyzer. The performance analyzer utilizes a trained machine learning engine for predicting the execution time and the execution cost of the HPC application. FIG. 4 is a functional block diagram of the performance analyzer for generating recommendations for cloud instances for high performance computing (HPC) applications, using the system of FIG. 1, according to some embodiments of the present disclosure. As shown in FIG. 4, training steps for the trained machine learning engine comprises obtaining one or more attributes and the one or more machine specifications associated with the HPC application. The one or more attributes associated with the HPC application may include but are not limited to CPU utilization, Memory utilization, disk utilization, I/O reads and writes and network bandwidth, workload size and data-batch processing size. The one or more machine specifications associated with the HPC application may include but are not limited to central processing unit (CPU), memory, disk and network bandwidth, clock speed, cache sizes, disk storage type, interconnect, accelerator type if any, and accelerator capacity. Further, a training dataset is prepared that comprises (i) the one or more attributes associated with the HPC application, (ii) the one or more combinations of one or more machine specifications associated with the HPC application, and (iii) and the execution time of the HPC application on each of the one or more combinations of the one or more machine specifications associated with the HPC application. In the present disclosure, relationship between the one or more attributes and the one or more machine specifications associated with the HPC application of any machine in general is mapped against execution time of the HPC application. For this purpose, the training dataset is created by configuring a variety of machine specifications in local environment and execution time is recorded along with the plurality of profile traces data. This data became quite useful in mapping the relationship between the one or more attributes and the one or more machine specifications associated with the HPC application and predicting the runtime of the HPC application. Furthermore, a grid of models is trained on the prepared training dataset. The grid of models is created by using one or more machine learning based regression models with a set of hyperparameters. The one or more machine learning based regression models may include but are not limited to Linear regression, Support Vector Regressor, and Random Forest Regressor. The grid of models is evaluated in terms of an accuracy metric to obtain an optimal model from the grid of models. The optimal model is further saved. As shown in the model inferencing block of the FIG. 4, the saved optimal model is used for predicting the execution time and estimating the execution cost of the HPC application. The steps for model inferencing comprising selecting the dataset of cloud instances classified into the best-suited category by the suitability matcher. Further, an input data for the model inference is prepared by collecting the plurality of profile trace data of the HPC application, workload size and batch processing size. Further, the dataset of cloud instances is included in the input data. Further, the saved optimal model is used to predict execution time of the HPC application for each cloud instance from the dataset of cloud instances classified into the best-suited category. The execution cost of the HPC application is estimated by considering rate of cloud instance for a duration of execution plus cloud instance spinning up overhead and extra cost of services that are used along with the cloud instance like disk volumes.

Referring to FIG. 3, at step 212, the one or more hardware processors are configured to update the dataset of the cloud instances with predicted execution time and predicted execution cost of the HPC application. Table 2 provided below shows a small subset of output of the updated dataset in small level experiments for the present disclosure.

| index | core | cache size(l1) | cache size (l2) | clock speed | memory | IOPS | storage | Network | Predicted time | Estimated cost |
|---|---|---|---|---|---|---|---|---|---|---|
| 0 | 2 | 32 | 1,024 | 2.6 | 8 | 4000 | 16 | 1 | 54 | 0.21 |
| 1 | 4 | 32 | 1,024 | 2.6 | 16 | 8000 | 32 | 1 | 43 | 0.25 |
| 2 | 8 | 32 | 1,024 | 2.6 | 32 | 16000 | 64 | 1 | 27 | 0.39 |

Table 2

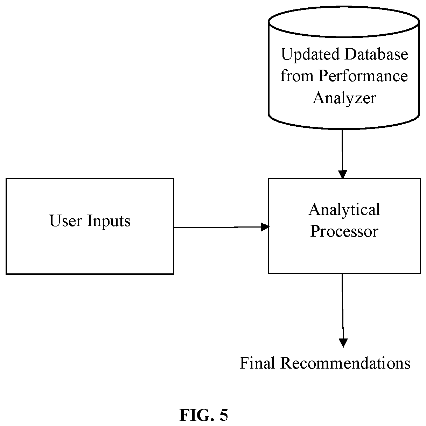

As shown in FIG. 2, output of the performance analyzer is fed to decision making enabler. At step 214 of the present disclosure, the one or more hardware processors are configured to generate a recommendation for one or more cloud instances from the updated dataset of the cloud instances in accordance with a plurality of user inputs using an optimization algorithm. The recommendation for the one or more cloud instances is generated based on (i) content of a configuration file comprising the plurality of user inputs and (ii) a criterion selected by the optimization algorithm between the execution cost and the execution time tradeoff. This criterion is tradeoff between the execution time and the execution cost. The optimization algorithm is used to find the optimal set of execution time and execution cost. FIG. 5 is a functional block diagram of the decision-making enabler for generating recommendations for cloud instances for high performance computing (HPC) applications, according to some embodiments of the present disclosure. As shown in FIG. 5, the content of the configuration file comprising the plurality of user inputs and the updated dataset of the cloud instances received as output of the performance analyzer are fed as input to an analytical processor. The plurality of user inputs may include but are not limited to user preferences containing parameters such as cost, service level agreement (SLA), vendor, and service types. The analytical processor perform analytical processing over the updated dataset of the cloud instances received as output of the performance analyzer against the plurality of user inputs to generate the recommendations for cloud instances for high performance computing (HPC) applications. This analytical processing is a piece of code which performs statistical arrangement on the updated dataset of the cloud instances and prioritize loud instances based on the plurality of user inputs and the criterion selected by the optimization algorithm between the execution cost and the execution time tradeoff. In an embodiment, the optimization algorithm may include but are not limited to a particle swarm optimization (PSO) algorithm, Bayesian optimization, genetic algorithm, differential evolution, and/or the like.

In the context of the present disclosure, the PSO algorithm is further better understood by way of following description provided as an exemplary explanation.

The PSO algorithm could be used to find optimal point of execution cost and execution time among cloud instance combinations. The PSO algorithm utilizes database of estimated execution times $T$ and execution costs $C$ as input, where $T = [T_1, T_2, ......., T_n]$ and $C = [C_1, C_2, ......., C_n]$. The objective function of fitness function for the optimization problem is provided as shown in equation (5) below:

$$F = w_1 * T + w_2 * C \quad (5)$$

Here, $w_1$ and $w_2$ are weights for execution time and execution cost and are chosen such that $w_1 + w_2 = 1$ and $w_1$, $w_2$ belong to [0,1]. $w_1$ and $w_2$ are dependent upon user's preference over execution cost and the execution time tradeoff. The PSO algorithm start with random initialization of particles (i.e., pair of execution time and execution cost values) and through iterative process converges towards optimal point. Here objective is to minimize $F$. The steps for the PSO algorithm comprises:

1. Starting with 100 random particles $n = 100$, populating a sample with random positions and random velocities and evaluating $F$ for each particle.
2. Setting hyperparameters of algorithms such as $W$, $c_1$, $c_2$, $u_1$, $u_2$, where $W$ represents inertia, $c_1$ and $c_2$ are known as correction factors and $u_1$ and $u_2$ represent random numbers between [0,1].
3. For each particle $p_i$, performing,

a. Calculating updated velocity as $v_{new} = v_{old} * W + c_1 * u_1 * (p_{best}-p_i) + c2 * u2 * (g_{best} - p_i)$. Here $p_{best}$ represents best position of a particle and $g_{best}$ represents global best position. Both $p_{best}$ and $g_{best}$ are vectors containing $T$

and $C$ values so do $p_i$.

b. Calculating position of particle $p_{new} = p_{old} + v_{new}$

c. Calculating objective function $F$.

d. If current $F$ for $p_i$ is better than earlier, then best position and velocity of particle $p_i$ are updated.

e. If current minimum $F$ is lower than earlier $F$, then $g_{best}$ is updated.

4. Iterating the process until minimum $F$ stops changing values.

In an embodiment, the cloud readiness of the HPC application to be migrated on the cloud platform is assessed based on the generated recommendations for the one or more cloud instances. In the present disclosure, different I/O combinations, storage combinations and network combinations are considered combined with cloud instances creating a variety of cloud service combinations for a job. Also, serverless is considered as an option for migration for a particular job. If the job is more suitable for serverless than VMS, then serverless comes on top of VMS in recommendations.

A working example of HPC application for the present disclosure is explained by way of following description provided as an exemplary explanation.

AutoDock® is a molecular modeling simulation software (suite of automated docking tools). It is especially effective for protein-ligand docking. It is designed to predict how small molecules, such as substrates or drug candidates, bind to a receptor of known 3D structure. Over the years, it has been modified and improved to add new functionalities, and multiple engines have been developed. It is available under the General Public License (GNU). It is used by the FightAIDS@Home and OpenPandemics - COVID-19 projects run at World Community Grid, to search for antivirals against HIV/AIDS and COVID-19. AutoDock® consists of two main programs: AutoDock® for docking of the ligand to a set of grids describing a target protein and AutoGrid® for pre-calculating these grids. In addition to using these two programs for docking, atomic affinity grids can be visualized. This can help, to guide organic synthetic chemists to design better binders. AutoDock® has applications in X-ray crystallography, structure-based drug design, lead optimization, virtual screening, combinatorial library design, protein-protein docking and chemical mechanism studies. This application is a useful application in the HPC-LiveScience domain. Recommending best cloud instances for workloads of such HPC application can have great impact in the domain.

The written description describes the subject matter herein to enable any person skilled in the art to make and use the embodiments. The scope of the subject matter embodiments is defined herein and may include other modifications that occur to those skilled in the art. Such other modifications are intended to be within the scope of the present disclosure if they have similar elements that do not differ from the literal language of the embodiments or if they include equivalent elements with insubstantial differences from the literal language of the embodiments described herein.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated herein by the following claims.

## Claims

1. A processor implemented method (200) for assessing cloud readiness of a high performance computing (HPC) application to be migrated on a cloud platform, comprising:

   obtaining (202), via one or more hardware processors, a plurality of profile trace data of the HPC application and a dataset of cloud instances, wherein the plurality of profile trace data is obtained by performing application profiling using one or more profiling tools;
   generating (204), via the one or more hardware processors, (i) an application profile traces vector by combining one or more profile features extracted from the plurality of profile trace data and (ii) a cloud instances matrix using a plurality of cloud features obtained from an extended and transformed dataset of the cloud instances;
   computing (206), via the one or more hardware processors, a suitability score using the application profile traces vector and each record of the cloud instances matrix, wherein the suitability score is computed by calculating a Euclidean distance and a cosine similarity between the application profile traces vector and the cloud instances matrix;
   classifying (208), via the one or more hardware processors, the dataset of cloud instances into at least one of (i) a best-suited category, (ii) an average-suited category, and (iii) a worst-suited category, wherein classification is performed by applying K-means clustering method on the dataset of the cloud instances updated based on the generated suitability score;
   predicting (210), via the one or more hardware processors, an execution time and an execution cost of the HPC application on one or more combinations of one or more machine specifications associated with the HPC application using a performance analyzer, wherein the performance analyzer utilizes a trained machine learning engine for predicting the execution time and the execution cost of the HPC application;
   updating (212), via the one or more hardware processors, the dataset of the cloud instances with the predicted execution time and the predicted execution cost of the HPC application; and
   generating (214), via the one or more hardware processors, a recommendation for one or more cloud instances from the updated dataset of the cloud instances in accordance with a plurality of user inputs using an optimization algorithm.

2. The processor implemented method as claimed in claim 1, wherein training steps for the trained machine learning engine comprises:

   obtaining one or more attributes and the one or more machine specifications associated with the HPC application;
   preparing a training dataset comprising (i) the one or more attributes associated with the HPC application, (ii) the one or more combinations of one or more machine specifications associated with the HPC application, and (iii) and the execution time of the HPC application on each of the one or more combinations of the one or more machine specifications associated with the HPC application;
   training a grid of models on the prepared training dataset, wherein the grid of models is created by using one or more machine learning based regression models with a set of hyperparameters; and
   evaluating the grid of models in terms of an accuracy metric to obtain an optimal model from the grid of models.

3. The processor implemented method as claimed in claim 1, wherein the recommendation for the one or more cloud instances is generated based on (i) content of a configuration file comprising the plurality of user inputs and (ii) a criterion selected by the optimization algorithm between the execution cost and the execution time tradeoff.

4. The processor implemented method as claimed in claim 1, wherein the cloud readiness of the HPC application to be migrated on the cloud platform is assessed based on the generated recommendations for the one or more cloud instances.

5. A system (100) for assessing cloud readiness of a high performance computing (HPC) application to be migrated on a cloud platform, comprising:

> a memory (102) storing instructions;
> one or more communication interfaces (106); and
> one or more hardware processors (104) coupled to the memory (102) via the one or more communication interfaces (106), wherein the one or more hardware processors (104) are configured by the instructions to:

>> obtain a plurality of profile trace data of the HPC application and a dataset of cloud instances, wherein the plurality of profile trace data is obtained by performing application profiling using one or more profiling tools;
>> generate (i) an application profile traces vector by combining one or more profile features extracted from the plurality of profile trace data and (ii) a cloud instances matrix using a plurality of cloud features obtained from an extended and transformed dataset of the cloud instances;
>> compute a suitability score using the application profile traces vector and each record of the cloud instances matrix, wherein the suitability score is computed by calculating a Euclidean distance and a cosine similarity between the application profile traces vector and the cloud instances matrix;
>> classify the dataset of cloud instances into at least one of (i) a best-suited category, (ii) an average-suited category, and (iii) a worst-suited category, wherein classification is performed by applying K-means clustering method on the dataset of the cloud instances updated based on the generated suitability score;
>> predict an execution time and an execution cost of the HPC application on one or more combinations of one or more machine specifications associated with the HPC application using a performance analyzer, wherein the performance analyzer utilizes a trained machine learning engine for predicting the execution time and the execution cost of the HPC application;
>> update the dataset of the cloud instances with the predicted execution time and the predicted execution cost of the HPC application; and
>> generate a recommendation for one or more cloud instances from the updated dataset of the cloud instances in accordance with a plurality of user inputs using an optimization algorithm.

6. The system as claimed in claim 5, wherein training steps for the trained machine learning engine comprises:

> obtaining one or more attributes and the one or more machine specifications associated with the HPC application;
> preparing a training dataset comprising (i) the one or more attributes associated with the HPC application, (ii) the one or more combinations of one or more machine specifications associated with the HPC application, and (iii) and the execution time of the HPC application on each of the one or more combinations of the one or more machine specifications associated with the HPC application;
> training a grid of models on the prepared training dataset, wherein the grid of models is created by using one or more machine learning based regression models with a set of hyperparameters; and
> evaluating the grid of models in terms of an accuracy metric to obtain an optimal model from the grid of models.

7. The system as claimed in claim 5, wherein the recommendation for the one or more cloud instances is generated based on (i) content of a configuration file comprising the plurality of user inputs and (ii) a criterion selected by the optimization algorithm between the execution cost and the execution time tradeoff.

8. The system as claimed in claim 5, wherein the cloud readiness of the HPC application to be migrated on the cloud platform is assessed based on the generated recommendations for the one or more cloud instances.

9. One or more non-transitory computer readable mediums comprising one or more instructions which when executed by one or more hardware processors cause:

> obtaining a plurality of profile trace data of the HPC application and a dataset of cloud instances, wherein the plurality of profile trace data is obtained by performing application profiling using one or more profiling tools;
> generating (i) an application profile traces vector by combining one or more profile features extracted from the plurality of profile trace data and (ii) a cloud instances matrix using a plurality of cloud features obtained from an extended and transformed dataset of the cloud instances;

computing a suitability score using the application profile traces vector and each record of the cloud instances matrix, wherein the suitability score is computed by calculating a Euclidean distance and a cosine similarity between the application profile traces vector and the cloud instances matrix;

classifying the dataset of cloud instances into at least one of (i) a best-suited category, (ii) an average-suited category, and (iii) a worst-suited category, wherein classification is performed by applying K-means clustering method on the dataset of the cloud instances updated based on the generated suitability score;

predicting an execution time and an execution cost of the HPC application on one or more combinations of one or more machine specifications associated with the HPC application using a performance analyzer, wherein the performance analyzer utilizes a trained machine learning engine for predicting the execution time and the execution cost of the HPC application;

updating the dataset of the cloud instances with the predicted execution time and the predicted execution cost of the HPC application; and

generating a recommendation for one or more cloud instances from the updated dataset of the cloud instances in accordance with a plurality of user inputs using an optimization algorithm.

10. The one or more non-transitory computer readable mediums as claimed in claim 9, wherein training steps for the trained machine learning engine comprises:

obtaining one or more attributes and the one or more machine specifications associated with the HPC application;

preparing a training dataset comprising (i) the one or more attributes associated with the HPC application, (ii) the one or more combinations of one or more machine specifications associated with the HPC application, and (iii) and the execution time of the HPC application on each of the one or more combinations of the one or more machine specifications associated with the HPC application;

training a grid of models on the prepared training dataset, wherein the grid of models is created by using one or more machine learning based regression models with a set of hyperparameters; and

evaluating the grid of models in terms of an accuracy metric to obtain an optimal model from the grid of models.

11. The one or more non-transitory computer readable mediums as claimed in claim 9, wherein the recommendation for the one or more cloud instances is generated based on (i) content of a configuration file comprising the plurality of user inputs and (ii) a criterion selected by the optimization algorithm between the execution cost and the execution time tradeoff.

12. The one or more non-transitory computer readable mediums as claimed in claim 9, wherein the cloud readiness of the HPC application to be migrated on the cloud platform is assessed based on the generated recommendations for the one or more cloud instances.

System **100**

**108**

Memory **102**

Modules **102a**

Repository **102b**

I/O interface(s) **106**

Hardware
processor(s) **104**

**FIG. 1**

**FIG. 2**

Obtaining, via one or more hardware processors, a plurality of profile trace data of the HPC application and a dataset of cloud instances, wherein the plurality of profile trace data is obtained by performing application profiling using one or more profiling tools — 202

Generating, via the one or more hardware processors, (i) an application profile traces vector by combining one or more profile features extracted from the plurality of profile trace data and (ii) a cloud instances matrix using a plurality of cloud features obtained from an extended and transformed dataset of the cloud instances — 204

Computing, via the one or more hardware processors, a suitability score using the application profile traces vector and each record of the cloud instances matrix, wherein the suitability score is computed by calculating an Euclidean distance and a cosine similarity between the application profile traces vector and the cloud instances matrix — 206

Classifying, via the one or more hardware processors, the dataset of cloud instances into at least one of (i) a best-suited category, (ii) an average-suited category, and (iii) a worst-suited category, wherein classification is performed by applying K-means clustering method on the dataset of the cloud instances updated based on the generated suitability score — 208

Classifying, via the one or more hardware processors, the dataset of cloud instances into at least one of (i) a best-suited category, (ii) an average-suited category, and (iii) a worst-suited category, wherein classification is performed by applying K-means clustering method on the dataset of the cloud instances updated based on the generated suitability score — 210

Updating, via the one or more hardware processors, the dataset of the cloud instances with predicted execution time and predicted execution cost of the HPC application — 212

Generating, via the one or more hardware processors, a recommendation for one or more cloud instances from the updated dataset of the cloud instances in accordance with a plurality of user inputs using an optimization algorithm — 214

200 —

**FIG. 3**

**FIG. 4**

Updated Database
from Performance
Analyzer

User Inputs → Analytical
Processor

Final Recommendations

**FIG. 5**

Europäisches
Patentamt

European
Patent Office

Office européen
des brevets

# EUROPEAN SEARCH REPORT

Application Number

EP 24 18 4148

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HER LISA ET AL: "A2Cloud-cc: A Machine Learning Council to Guide Cloud Resource Selection for Scientific Applications", 2020 IEEE 19TH INTERNATIONAL SYMPOSIUM ON NETWORK COMPUTING AND APPLICATIONS (NCA), IEEE, 24 November 2020 (2020-11-24), pages 1-5, XP033871183, DOI: 10.1109/NCA51143.2020.9306720 [retrieved on 2020-12-23] * the whole document * | 1-12 | INV. G06F9/50 |
| A | BALOS CODY ET AL: "A2Cloud: An Analytical Model for Application-to-Cloud Matching to Empower Scientific Computing", 2018 IEEE 11TH INTERNATIONAL CONFERENCE ON CLOUD COMPUTING (CLOUD), IEEE, 2 July 2018 (2018-07-02), pages 548-555, XP033399880, DOI: 10.1109/CLOUD.2018.00076 [retrieved on 2018-09-07] * the whole document * | 1-12 | |
| A | CHAHAL DHEERAJ D CHAHAL@TCS COM ET AL: "iSeSA Towards Migrating HPC and AI Workloads to Serverless Platform", PROCEEDINGS OF THE 6TH INTERNATIONAL CONFERENCE ON FRONTIERS OF EDUCATIONAL TECHNOLOGIES, ACMPUB27, NEW YORK, NY, USA, 1 July 2022 (2022-07-01), pages 1-8, XP058813181, DOI: 10.1145/3526058.3535455 ISBN: 978-1-4503-9742-1 * the whole document * | 1-12 | TECHNICAL FIELDS SEARCHED (IPC) G06F |

-/--

The present search report has been drawn up for all claims

| Place of search | Date of completion of the search | Examiner |
|---|---|---|
| The Hague | 30 July 2024 | Archontopoulos, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 24 18 4148

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | KULKARNI RAJESH ET AL: "iCiRe: Optimal Scheduling of HPC Applications in Multi-Cloud", 29TH ACM SYMPOSIUM ON VIRTUAL REALITY SOFTWARE AND TECHNOLOGY, ACMPUB27, NEW YORK, NY, USA, 4 December 2023 (2023-12-04), pages 1-6, XP059460478, DOI: 10.1145/3603166.3632552 ISBN: 979-8-4007-0328-7 * the whole document * ----- | 1-12 | |
| | | | **TECHNICAL FIELDS SEARCHED (IPC)** |

The present search report has been drawn up for all claims

| Place of search | Date of completion of the search | Examiner |
|---|---|---|
| The Hague | 30 July 2024 | Archontopoulos, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202321051753